# EUROPÄISCHE PATENTANMELDUNG

(11) **EP 1 123 836 A2**
(43) Veröffentlichungstag der Anmeldung: **16.08.2001**
(21) Anmeldenummer: 01102963.4
(22) Anmeldetag: 08.02.2001
(51) Int. Cl.: B60P 3/20

(54) **Kühlfahrzeug**

(30) Priorität: 08.02.2000 DE 20002153 U
(71) Anmelder: Brandt Kühlfahrzeugbau, 32699 Extertal (DE)
(72) Erfinder: Brandt, Werner, 32699 Extertal (DE)
(74) Vertreter: Loesenbeck, Karl-Otto, Dipl.-Ing.

(57) **Zusammenfassung**

Ein Kühlfahrzeug, welches mit einem Kühlaggregat zur Beaufschlagung des Laderaumes mit Kühlluft ausgestattet ist, soll so gestaltet werden, daß es zur Auslieferung von bestellten Waren in haushaltsgerechten Mengen geeignet ist.

Der Laderaum des Fahrzeugaufbaues ist durch wenigstens eine Zwischenwand (14) in mindestens eine vom Inneren des Fahrzeugaufbaues zugängliche, zur Lagerung von tragbaren Transportkisten dienende Kühlkammer (13) aufgeteilt. Die Zwischenwand (14) kann aus einer transparenten Folie gebildet sein, die zu einer Rolle aufgewickelt werde kann. Alternativ kann eine Zwischenwand (14) auch aus mehreren in Längsrichtung des Kühlfahrzeuges (10) verschiebbaren Schiebeelementen aus einem transparenten Werkstoff gebildet sein. Jede Kühlkammer (13) ist mit einer nach Art eines Regals gestalteten Aufnahme (11) oder einer Kühltheke für die Transportkästen (12) ausgestattet.

## Beschreibung

Die Erfindung betrifft ein Kühlfahrzeug, welches mit einem Kühlaggregat zur Beaufschlagung des Laderaumes des Fahrzeugaufbaus mit Kühlluft ausgestattet ist.

Kühlfahrzeuge sind in verschiedenen Ausführungen bekannt. Sie werden nicht nur zum Transport von zu kühlendem Gut, d.h. Lebensmitteln, die nicht gefroren werden dürfen, verwendet, sondern zum gleichzeitigen Transport von Tiefkühlkost, Kühlgut und auch ggf. Trockenfracht verwendet. Die Kühlfahrzeuge sind mit einer Kompressorkühlanlage ausgestattet, die einen Verflüssiger und einen Verdampfer beinhaltet. Der Laderaum des Aufbaus des Kühlfahrzeuges ist durch Längstrennwände in einzelne Kammern unterteilt. Die Größe der einzelnen Kammern kann durch in Längsrichtung verfahrbare Schiebeelemente verändert werden, damit nur der Raum des Aufbaus gekühlt wird, der mit dem entsprechenden Gut beladen ist. Derartige Kühlfahrzeuge werden eingesetzt, um Supermärkte u. dgl. zu beliefern.

Es wird jedoch auch eine Belieferung von Haushalten angestrebt, dh. die Transportaufgabe bis zum Endverbraucher. Die Bestellungen werden zum Beispiel per Internet bei dem entsprechenden Lieferanten aufgegeben. Bei diesem Lieferanten wird die bestellte Ware in einem geeigneten Transportkasten zusammengestellt und dann ausgeliefert.

Da die Warenmengen oft sehr klein sind, die Temperaturbereiche, beispielsweise bei Frischware + 5°C, für Tiefkühlware - 20°C und für Trockenfracht bei + 15 bis + 20°C liegen, dann sehr schwanken und räumlich auseinander gehalten werden müssen, sind die bislang bekannten Kühlfahrzeuge dafür nicht geeignet.

Der Erfindung liegt die Aufgabe zugrunde, ein Kühlfahrzeug der eingangs näher beschriebenen Art so zu gestalten, daß es sich zur Auslieferung von bestellten Waren in haushaltsgerechten Mengen insbesondere für Kühlgut eignet.

Die gestellte Aufgabe wird gelöst, indem der Laderaum des Fahrzeugaufbaus durch wenigstens eine Zwischenwand in mindestens eine vom Inneren des Aufbaus zugängliche, zur Lagerung von tragbaren Transportkästen dienende Kühlkammer aufgeteilt ist.

Da im Haushalt nicht nur Kühlgut, sondern ggf. auch Tiefkühlkost und Trockenware benötigt wird, setzt sich die aufgegebene Bestellung aus diesen Warenarten zusammen. Damit die Lieferung gleichzeitig durch einen Lieferdienst erfolgen kann, ist das Kühlfahrzeug mit mindestens einer Kühlkammer ausgestattet, die zur Aufnahme von tragbaren Transportkästen geeignet ist. Die von einem Haushalt bestellte Tiefkühlware wird dann in diesem Transportkasten zusammengestellt. Sofern noch Tiefkühlkost oder Trockenware bestellt wird, muß der Fahrer bzw. Auslieferer die Bestellung durch diese Waren komplettieren. Dazu müssen geeignete Transportmöglichkeiten im Fahrzeug vorgesehen sein. Die Lieferung muß in tragbaren Transportkästen erfolgen, die jedoch möglichst geschlossen sein sollten, damit die ggf. höhere Umgebungsluft zurückgehalten wird, und damit der Fahrer bzw. Auslieferer sie dem Besteller aushändigen kann.

Damit eine ausreichende Größe der Kühlkammer zur Verfügung steht, ist vorgesehen, daß deren Grundfläche ca. 1/3 bis ¼ der Grundfläche des Laderaumes entspricht. Daraus ergibt sich, daß die Breite der Kühlkammer ca. 1/3 der Breite des Aufbaus des Kühlfahrzeuges entspricht. Da der Fahrer die Transportkästen aus der Kühlkammer entnehmen muß, diese aber ansonsten geschlossen sein sollte, ist vorgesehen, daß die Zwischenwand aus einer zu einer Rolle aufwickelbaren, transparenten Folie gebildet ist. Die Dicke der Folie sollte möglichst groß sein, jedoch sollte die Flexibilität erhalten bleiben. Der Fahrer kann dann die Transportkästen von der Mitte her entnehmen, wobei die Anordnung so getroffen sein sollte, daß ein Umräumen vermieden wird. Anstelle einer aufwickelbaren Folie, kann die Zwischenwand auch aus mehreren in Längsrichtung des Kühlfahrzeugs verschiebbaren Schiebeelementen gebildet sein. Vorzugsweise kommen drei Schiebeelemente aus einem Kunststoff in Betracht. Alternativ können auch die sog. Slip-Flap-Türen verwendet werden. Zur übersichtlichen Anordnung der Transportkästen und sicheren Entnahme ist vorgesehen, daß jede Kühlkammer mit einer nach Art eines Regals gestalteten Aufnahme für die Transportkästen ausgestattet ist. Insbesondere bei kleineren Fahrzeugen wird dann das gesamte Kühlsystem an die regalartige Aufnahme angeschlossen. Das Kühlaggregat könnte dann ein Kompressor sein, der mit einer Spannung von 12 V betrieben wird. Bei größeren Fahrzeugen reicht dann die Leistung nicht mehr aus. Es wird dann der Verdampfer des Kühlaggregates an die regalartige Aufnahme angeschlossen. Zum schnellen Auswechseln der regalartigen Aufnahme bzw. der Kühltheke kann diese mit Rollen ausgestattet sein. Zweckmäßigerweise ist der Innenraum des Aufbaus des Kühlfahrzeugs mit einem begehbaren Mittelgang ausgestattet. An einer Seite befindet sich dann die Kühlkammer und an der anderen Seite ist ein Aufbau zum Transport von Trockenfracht vorgesehen, wobei die Trockenfracht ebenfalls vorzugsweise in Transportkästen gelagert ist. Auch diese Zusammenstellung könnte auftragsbezogen sein. Die Kühlkammer liegt zweckmäßigerweise an der Seite des Fahrzeuges, an der auch das Lenkrad vorgesehen ist. Der Fahrer kann dann vom Fahrersitz aus an der Kühlkammer vorbeigehen und den entsprechenden Transportkasten entnehmen. Auf dem Rückweg in Richtung zum Führerhaus kann er dann die Trockenfracht bzw. die Transportkästen gleichzeitig entnehmen. Das Fahrzeug ist zweckmäßigerweise mit einer Heckklappe oder mit Türen ausgestattet, um in einfachster Weise den Laderaum zu beladen. Die Kühlkammer ist zweckmäßigerweise mit einem sichtbaren Temperaturaufzeichnungsgerät ausgestattet. Dies kann ein sichtbares Thermometer sein, falls nur Kühlgut gefahren wird. Wird jedoch Tiefkühlware eingebracht, wird ab einem bestimmten Rauminhalt ein die Temperatur aufzeichnendes Gerät erforderlich. Damit man die Temperaturen lückenlos kontrollieren kann, könnten die Temperaturen durch einen Drucker oder dgl. zum stetigen Nachweis festgehalten werden. Dies kann bei Lebensmittelkontrollen vorteilhaft sein. Die Zwischenwand und die regalartigen Aufnahmen sollten aus einem gut zu reinigenden physiologisch unbedenklichen Werkstoff gefertigt werden. Solche Werkstoffe sind beispielsweise Polyesterteile sowie eloxierte Profile zur Verbindung dieser Teile.

Damit auch Tiefkühlware bzw. Tiefkühlkost gefahren werden kann, ist vorgesehen, daß der Laderaum mit mindestens einem Anschluß für eine Tiefkühltruhe ausgestattet ist. Vorzugsweise ist der Laderaum jedoch mit zwei Tiefkühltruhen ausgestattet, die zwischen dem Fahrerhaus und den Aufnahmen für die Transportkästen angeordnet sind. Da zur Befüllung dieser Tiefkühltruhen diese aus dem Fahrzeug herausgenommen und anschließend wieder eingebracht werden, ist vorgesehen, daß der Aufbau mit einer entsprechenden Klappe oder einer Tür ausgestattet ist, die in einer Seitenwand vorgesehen ist. Diese Klappe ist dann so gestaltet, daß die Tiefkühltruhe gerollt werden kann. Dazu können in der Klappe entsprechende Rollen oder außen am Boden der Tiefkühltruhe vorgesehen sein. In den meisten Staaten ist das Lenkrad eines Fahrzeuges an der linken Seite, bezogen auf die Vorwärtsfahrtrichtung angeordnet. Für das erfindungsgemäße Kühlfahrzeug ist es zweckmäßig, wenn der Sitz für den Beifahrer entfällt. Er kann dann verwendet werden, um ein Fördermittel für die Transportkästen mitzuführen, beispielsweise eine Sackkarre. Damit eine ausreichend große Öffnung für den Ausstieg des Fahrers zur Verfügung steht, ist vorgesehen, daß an der dem Fahrersitz gegenüberliegenden Seite eine Schiebetür vorgesehen ist oder daß diese Tür an einem Parallelführungsgestänge aufgehängt ist, damit ein geringstmöglicher Freiraum zum Öffnen und Schließen dieser Tür benötigt wird.

Die Transportkästen sollten zweckmäßigerweise viereckige Grundflächen haben, damit beim Aneinanderreihen und beim Stapeln keine Leerräume entstehen. Außerdem sollten die Seitenlängen ungleich sein. Es besteht dann die Möglichkeit, daß innerhalb der Kühlkammer die Transportkästen mit ihren Längsseiten aneinandergereiht werden, während in der Aufnahme für die Trockenfracht sie mit den Schmalseiten aneinandergereiht werden.

Die regalförmige Aufnahme könnte auch als ein Kühlregal für den mobilen Einsatz bezeichnet werden, welches bei Kofferaufbauten bevorzugt mit Rädern ausgerüstet wird und somit in den Wagen hineingeschoben und an der Wand verriegelt werden kann. Bei Kastenwagen mit einem Radkasten werden diese Kühlregale in den Wagen eingehoben und an den Wänden verschraubt. Die Kühlregale lassen sich bei Kofferaufbauten innerhalb von Sekunden wieder entfernen, während bei Kastenwagen die Herausnahme mehrere Minuten dauert.

Die Kühlregale sind so eingerichtet, daß die Transportkästen mit einer Luftumspülung gestapelt werden können. Das Kühlregal hat dazu vorne mindestens eine Kante, deren Höhe das 1 1/2fache eines Transportkastens entspricht. Durch diesen truhenähnlichen Aufbau kann die Luft im unteren Bereich nicht ausfallen.

Die Kühlregale werden am Heck mit einer Klappe ausgestattet, um sie mit den Transportkästen zu beschicken. Die Entnahme der tragbaren Transportkästen erfolgt von der Seite. Die Abdichtung der Seiten erfolgt durch Rollos, die aus einem speziellen, durchsichtigen Kunststoffmaterial gerfertigt sind. Sie können je nach der Länge des Kühlregals zwei- oder dreifach geteilt werden. Ein schneller Zugriff auf den jeweiligen Transportkasten ist somit möglich. Die Transportkästen sind mit laufenden Nummern beschriftet, so daß die Kundenreihenfolge sofort erkennbar ist, so daß ein Umräumen vermieden wird.

Anstelle eines aufwickelbaren Rollos kann die Zwischenwand auch aus mehreren in Längsrichtung des Kühlfahrzeuges verschiebbaren Schiebeelementen ausgebildet werden. Vorzugsweise kommen drei Schiebeelemente aus einem durchsichtigen Kunststoff in Betracht. Alternativ können auch die sogenannten Slip-Flap-Türen verwendet werden, sofern die notwendige Innenbreite vorhanden ist.

Das Kühlaggregat wird gesplittet. Der Verdampfer wird fest mit dem Kühlregal verbunden. Die Verbindung der Schläuche zum Verflüssiger erfolgt über Schnellkupplungen. Der Kompressor wird bei großen Regalen vom LKW-Motor angetrieben, bei kleineren Regalen über die Bordnetzspannung von 12 Volt. Dann kann auch der Verflüssiger mit dem Kühlregal eine Einheit bilden, wobei durch eine Öffnung nach außen die Warmluft abgeblasen wird.

Bei einer ausreichend großen Leistung der Kühlanlage kann eine Bi-Temperatur-Anlage montiert werden. Das hätte zur Folge, daß ein Tiefkühlregal, z.B. an der rechten Seite montiert werden kann, dessen Temperatur beispielsweise -20°C beträgt und an der linken Seite ein Frischeregal mit einer Temperatur von beispielsweise +5°C. In diesem Fall wird ein Kompressor erforderlich, der direkt vom Motor angetrieben wird. Alternativ dazu ist auch eine Generatoranlage mit Stromerzeugung möglich.

Bei einem Tiefkühlregal wird ab 2 m³ ein aufzeichnendes Temperaturgerät erforderlich und installiert. Damit kann man die Temperaturen lückenlos protokollieren und über 365 Tage speichern. Die Verordnung zum Transport von Tiefkühlgut verlangt eine solche Kontrolle. Über einen Drucker können Protokolle ausgedruckt werden um die jeweilige Temperatur auch dem Kunden darzustellen.

Bei einem Kofferaufbau wird eine Größenordnung von z.B. 3,5 m x 0,8 m x 1,9 m für das Kühlregal angestrebt. Es sollte beispielsweise mit 6 Lenkrollen ausgestattet sein, so daß es von einem Aufbau in einen anderen Aufbau verfrachtet werden kann. Sofern die Kühlregale mit einem 12 Volt Kühlgerät ausgestattet werden, wird nur ein Stromanschluß erforderlich, so daß das Problem einer Kältekupplung nicht mehr auftritt.

Sofern es sich um Großfahrzeuge handelt, die zwei oder mehr Kühlregale benötigen, ist es ohne weiteres möglich, daß man einen bestehenden Kältekreislauf anzapft und eine zusätzliche Einspritzung anschließt. Dort sollte man dann aber erfahrungsgemäß mit größeren Trocknern arbeiten, damit beim Abklemmen der Schnellkupplung nicht die Feuchtigkeit im Kältmittel zu Verfrierungen der Ventile führt.

Anhand der beiliegenden Zeichnungen wird die Erfindung noch näher erläutert. Es zeigen:
- Figur 1: ein erfindungsgemäßes Kühlfahrzeug mit Blick auf die Kühlkammer vom Inneren des Aufbaus her,
- Figur 2: das erfindungsgemäße Kühlfahrzeug in einer Draufsicht,
- Figur 3: das Kühlfahrzeug gemäß den Figuren 1 und 2 in einer Rückansicht und
- Figur 4: eine der Figur 2 entsprechende Draufsicht, den Weg des Fahrers anzeigend.

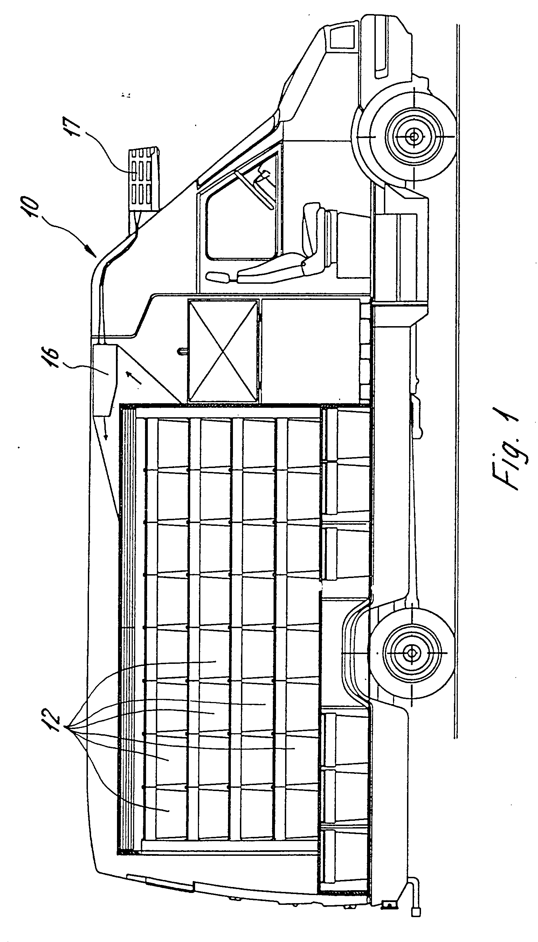

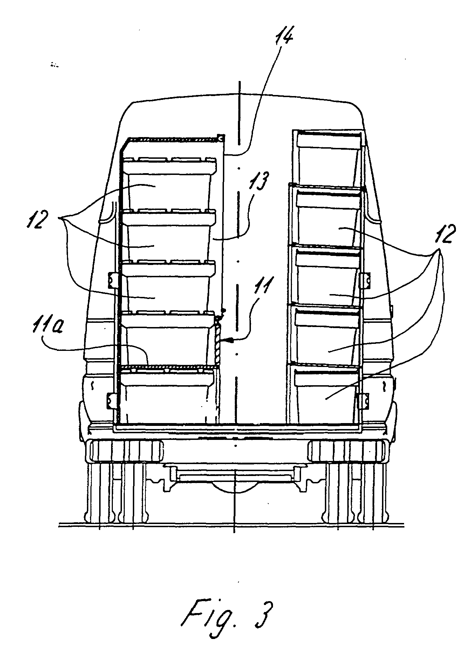

Das in den Figuren 1 bis 4 dargestellte Kühlfahrzeug 10 ist mit einem allgemeinen Aufbau ausgestattet, welches heckseitig eine ein- oder zweiflügelige Tür oder eine Klappe zum Be- und Entladen enthält. Das erfindungsgemäße Kühlfahrzeug 10 enthält keine Quertrennwand zur Abgrenzung des Führerhauses, so daß der Fahrer den Laderaum bequem erreichen kann. An der in Fahrtrichtung linken Seite ist der Laderaum mit einer regalartigen Aufnahme 11 für mehrere übereinander und nebeneinander zu stellenden Transportkästen 12 ausgestattet. Im dargestellten Ausführungsbeispiel ist die Aufnahme 11 mit einem Boden 11a ausgestattet, auf den maximal vier Transportkästen 12 übereinander gestapelt werden können. Unterhalb des Bodens 11a ist ein weiterer Transportkasten 12 untergebracht. Die Anzahl der nebeneinander anzuordnenden Transportkästen 12 richtet sich nach der Länge des Fahrzeugaufbaus. Sinngemäß ist diese Aufnahme 11 wie eine Kühltheke ausgebildet. Damit eine als geschlossen anzusehende Kühlkammer 13 entsteht, in der die Transportkästen 12 untergebracht sind, ist der Laderaum durch eine Zwischenwand 14 unterteilt. Diese Zwischenwand 14 erstreckt sich in Längsrichtung und kann beliebig gestaltet sein. So ist es denkbar, daß sie als Rollo ausgebildet ist, in dem eine transparente und flexible Folie zur einer Rolle aufgewickelt wird. Diese Zwischenwand muß sich nicht bis auf den Boden des Laderaumes erstrecken, sondern kann sich nur gemäß der Darstellung nach der Figur 3 über die oberen drei Reihen von Transportkästen 12 erstrecken, da die Zwischenwand 13 im unteren Bereich aus einer festen Platte gebildet ist. Dadurch wird ein Verrutschen der unteren Transportkästen 12 verhindert. Da die Transportkästen formschlüssig ineinandergreifen, ist ein Verrutschen der oberen Transportkästen 12 wirksam verhindert. Anstelle eines Rollos könnten auch zwei oder mehr Schiebeelemente die Zwischenwand 14 bilden. Bei einer entsprechenden Breite wären auch sogenannte Slip-Flap-Türen möglich. Die Zwischenwand 14 sollte jedoch so gestaltet werden, daß die Anordnung der Transportkästen 12 übersichtlich ist, und daß sie in kürzester Zeit vom Fahrer des Kühlfahrzeuges 10 entnommen werden können.

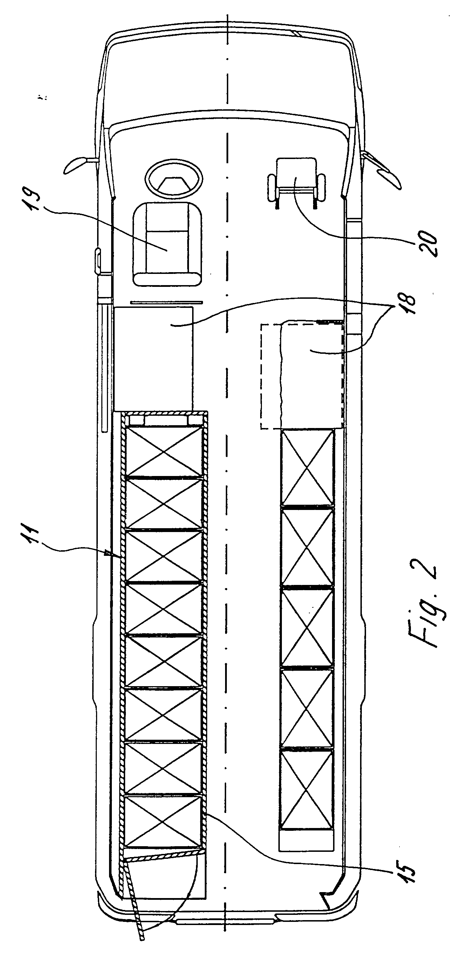

Gemäß der Darstellung nach der Figur 2 sind die Transportkästen 12 im Querschnitt rechteckig mit ungleichen Seitenlängen gestaltet. Da davon ausgegangen wird, daß bei einer Bestellung mehr Tiefkühlware bestellt wird als Trockenfracht, ist die Aufnahme 11 bzw. die Kühltheke so gestaltet, daß die Transportkästen 13 mit ihren längeren Seiten aneinandergereiht werden können. An der gegenüberliegenden Längsseite ist ebenfalls eine regalartige Aufnahme für die Transportkästen 12 vorgesehen, um darin vorzugsweise Trockenfracht zu lagern. Im dargestellten Ausführungsbeispiel werden dazu die schmaleren Seiten aneinandergereiht. Die regalförmige Aufnahme 11 ist in nicht näher dargestellter Weise mit Rollen ausgestattet, so daß sie komplett aus dem Fahrzeug herausgenommen bzw. hereingeschoben werden kann. Dazu ist der hintere Bereich der aufrechten festen Wand bzw. Platte 15 schwenkbar, wie die Figur 2 zeigt. Die Beaufschlagung der Kühlkammer 13 mit Kühlluft erfolgt entweder durch einen Kompressor, der mit einer Gleichspannung von 12 V betrieben wird und der direkt die regalförmige Aufnahme 11 beaufschlagt. Bei einer bestimmten Größe des Fahrzeuges ist der Verdampfer 16 des Kühlaggregates 17 der regalförmigen Aufnahme 11 zugeordnet.

Damit auch Tiefkühlkost bzw. -ware ausgeliefert werden kann, ist vorgesehen, daß das Kühlfahrzeug 10 mit einem oder mehreren Anschlüssen für Tiefkühltruhen 18 ausgestattet ist. Im dargestellten Ausführungsbeispiel ist das Kühlfahrzeug 10 mit zwei Tiefkühltruhen 18 ausgestattet. An der Fahrerseite ist die Wand des Aufbaus mit einer entsprechend großen Klappe oder einer Tür ausgestattet, damit diese Tiefkühltruhen 18 ausgewechselt werden können. Dazu ist zweckmäßigerweise die Klappe um eine untere horizontale Achse schwenkbar, so daß im Auslieferungslager die Tiefkühltruhe aus dem Laderaum des Aufbaus herausgezogen oder herausgeschoben werden kann, um sie erneut zu befüllen. An der dem Fahrersitz 19 gegenüberliegenden Seite ist das Kühlfahrzeug 10 mit einer Schiebetür ausgestattet, die vorzugsweise in nicht näher dargestellter Weise an einem Parallelführungsgestänge aufgehängt ist, so daß sie zum Öffnen nach hinten verschoben werden kann, wobei der nach außen gerichtete Weg relativ gering ist, damit der zum Öffnen benötigte Freiraum möglichst gering ist, damit keine Passanten, beispielsweise Fußgänger oder Fahrradfahrer, die auf entsprechenden Wegen gehen oder fahren, behindert werden. Anstelle eines Beifahrersitzes könnte das Kühlfahrzeug 10 mit einem Freiraum ausgestattet sein, um beispielsweise ein Fördermittel 20, vorzugsweise in Form einer Sackkarre mitzunehmen. Dadurch kann der Fahrer mehrere Transportkästen 12 bequem transportieren.

Zur Kontrolle der Temperatur ist die regalförmige Aufnahme 11 bzw. das Kühlregal mit einem sichtbaren Thermometer ausgestattet. Da es jedoch notwendig werden könnte, daß auch Tiefkühlware transportiert wird, wird ab einem bestimmten Rauminhalt ein Temperaturaufzeichnungsgerät notwendig. Zweckmäßigerweise könnte dies ein Temperaturschreiber und ein Drucker sein, damit jederzeit bei einer Kontrolle bewiesen werden kann, daß die Temperaturen innerhalb des zulässigen Bereichs gelegen haben.

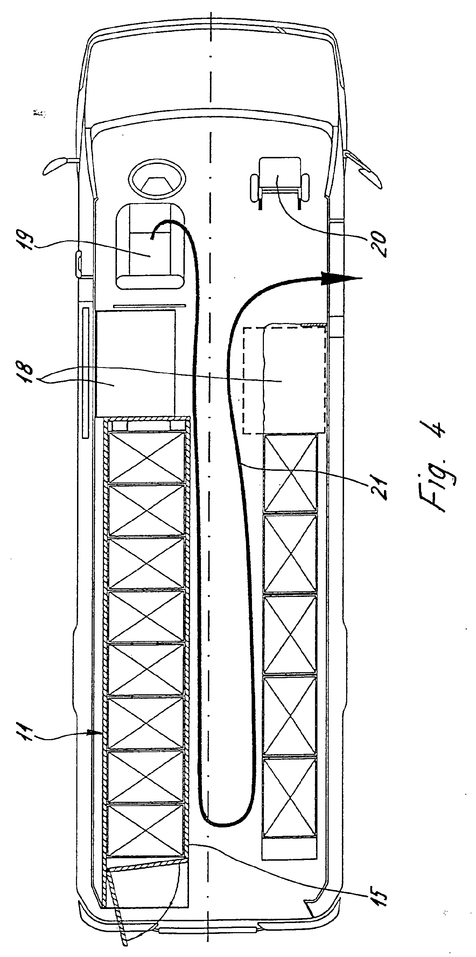

Die Erfindung ist nicht auf das dargestellte Ausführungsbeispiel beschränkt. Wesentlich ist, daß der Laderaum des Kühlfahrzeuges 10 mit wenigstens einer Zwischenwand 14 ausgestattet ist, so daß mindestens eine im wesentlichen geschlossene Kühlkammer 13 entsteht. Die Figur 4 zeigt durch die Bahn 21, wie der Weg des Fahrer ist, um einen Auftrag auszuliefern.

## Patentansprüche

1. Kühlfahrzeug, welches mit einem Kühlaggregat zur Beaufschlagung des Laderaums des Fahrzeugaufbaus mit Kühlluft ausgestattet ist, **dadurch gekennzeichnet, daß** der Laderaum des Fahrzeugaufbaus durch wenigstens eine Zwischenwand (14) in mindestens eine vom Inneren des Fahrzeugaufbaus zugängliche, zur Lagerung von tragbaren Transportkisten dienende Kühlkammer (13) aufgeteilt ist.

2. Kühlfahrzeug nach Anspruch 1, **dadurch gekennzeichnet, daß** die Zwischenwand (14) aus einer zu einer Rolle aufwickelbaren, transparenten Folie gebildet ist.

3. Kühlfahrzeug nach Anspruch 1, **dadurch gekennzeichnet, daß** die Zwischenwand (14) aus mehreren in Längsrichtung des Kühlfahrzeuges (10) verschiebbaren Schiebeelementen aus einem transparenten Werkstoff gebildet ist.

4. Kühlfahrzeug nach Anspruch 2 oder 3, **dadurch gekennzeichnet, daß** die transparente Folie oder die Schiebeelemente oberhalb einer festen aufrechten Platte oder eines Bodens (11a) angeordnet sind.

5. Kühlfahrzeug nach einem oder mehreren der vorhergehenden Ansprüche 1 bis 4, **dadurch gekennzeichnet, daß** jede Kühlkammer (13) mit einer nach Art eines Regals gestalteten Aufnahme (11) oder einer Kühltheke für die Transportkästen (12) ausgestattet ist.

6. Kühlfahrzeug nach einem oder mehreren der vorhergehenden Ansprüche 1 bis 4, **dadurch gekennzeichnet, daß** der Innenraum des Aufbaus des Kühlfahrzeuges (10) einen begehbaren Mittelgang und an einer Seite der Kühlkammer (13) und an der anderen Seite einen Aufbau zum Transport von Trockenfracht, vorzugsweise in Transportkästen (12) enthält.

7. Kühlfahrzeug nach einem oder mehreren der vorhergehenden Ansprüche 1 bis 6, **dadurch gekennzeichnet, daß** das Kühlregal oder die regalförmige Aufnahme (11) mit dem Verdampfern einer Kompressorkühlanlage (17) oder mit einem vom Stromversorgungsnetz des Kühlfahrzeuges (10) antreibbaren Kompressor derart verbunden ist, daß die Kühlluft über die Länge und Höhe gleichmäßig oder möglichst gleichmäßig verteilbar ist.

8. Kühlfahrzeug nach einem oder mehreren der vorhergehenden Ansprüche 1 bis 7, **dadurch gekennzeichnet, daß** die regalartige Aufnahme (11) oder das Kühlregal mit Rollen ausgestattet ist.

9. Kühlfahrzeug nach einem oder mehreren der vorhergehenden Ansprüche 1 bis 8, **dadurch gekennzeichnet, daß** der Laderaum des Kühlfahrzeuges (10) mit wenigstens einem Anschluß für eine Tiefkühltruhe und mit entsprechenden Stellflächen ausgestattet ist.

10. Kühlfahrzeug nach Anspruch 9, **dadurch gekennzeichnet, daß** die Tiefkühltruhe (18) bzw. die Tiefkühltruhen (18) zwischen dem Fahrerhaus und der regalartigen Aufnahme (11) bzw. der Aufnahme für die Trockenfracht vorgesehen ist.

11. Kühlfahrzeug nach Anspruch 9 oder 10, **dadurch gekennzeichnet, daß** der Aufbau des Kühlfahrzeuges (10) an der Fahrerseite eine Tür oder eine Klappe zum Einschieben oder Herausziehen der Tiefkühltruhe (18) aufweist, und daß die Tiefkühltruhe (18) oder die Klappe mit Rollen ausgestattet ist.

12. Kühlfahrzeug nach einem oder mehreren der vorhergehenden Ansprüche 1 bis 11, **dadurch gekennzeichnet, daß** der Aufbau des Kühlfahrzeuges (10) an der dem Fahrersitz (19) gegenüberliegenden Seite eine vorzugsweise an einem Parallelführungsgestänge aufgehängte Schiebetür aufweist.

13. Kühlfahrzeug nach einem oder mehreren der vorhergehenden Ansprüche 1 bis 12, **dadurch gekennzeichnet, daß** innerhalb der Kühlkammer (13) ein sichtbares Thermometer oder ein Temperaturschreiber vorgesehen, der vorzugsweise mit einem Drucker gekoppelt ist.
